# FASCICULE DE BREVET EUROPEEN

(11) **EP 1 979 223 B1**
(45) Date de publication et mention de la délivrance du brevet: **25.11.2009**
(21) Numéro de dépôt: 07731543.0
(22) Date de dépôt: 31.01.2007
(51) Int. Cl.: B62D 37/02

(54) **SOUS ENSEMBLE DE VEHICULE AUTOMOBILE ADAPTE A ETRE INTEGRE DANS UN ELEMENT DE CARROSSERIE DU VEHICULE**
KRAFTFAHRZEUGBAUGRUPPE ZUM EINBAU IN EINEN TEIL EINER FAHRZEUGKAROSSERIE
MOTOR VEHICLE SUBASSEMBLY DESIGNED TO BE INCORPORATED INTO PART OF THE VEHICLE BODYWORK

(30) Priorité: 02.02.2006 FR 0650371
(43) Date de publication de la demande: 15.10.2008
(73) Titulaire: Renault SAS, 92100 Boulogne Billancourt (FR)
(72) Inventeur: GALLAS, Quentin, F-75020 Paris (FR); LECLERC, Cédric, F-92130 Issy Les Moulineaux (FR); LEVALLOIS-GOY, Eugénie, F-75014 Paris (FR); MAKALA, Jérôme, F-78280 Guyancourt (FR); RADU, Mihai, F-75006 Paris (FR)
(74) Mandataire: Guyon, Rodolphe C.
(86) Numéro de dépôt international: PCT/FR2007/050715
(87) Numéro de publication internationale: WO 2007/088310

(56) Documents cités:
- EP-A- 1 544 089
- US-A1- 2002 190 165
- US-A1- 2003 214 199
- US-B1- 6 543 719

## Description

La présente invention se rapporte à un sous ensemble de véhicule automobile adapté à être intégré dans un élément de carrosserie du véhicule.

Elle concerne en particulier un tel sous ensemble qui présente un panneau externe délimitant un orifice de dispositif aérodynamique qui comporte une chambre dont le volume est variable.

Un tel sous ensemble est décrit dans le document FR2859160 dans lequel il y a deux orifices opposés pour un même actionneur.

Le sous ensemble selon FR2859160 est destiné à générer des flux d'air à travers les orifices pour réduire la traînée aérodynamique du véhicule lorsqu'il est en mouvement, en contrôlant des écoulements d'air sur la carrosserie. Ce contrôle constitue un moyen efficace pour diminuer la résistance au déplacement dans l'air et par conséquent, pour réduire la consommation énergétique dudit véhicule. En outre ce contrôle peut être utilisé pour améliorer la stabilité dynamique du véhicule.

En effet, lorsqu'un véhicule automobile est entraîné en mouvement dans l'air au niveau du sol, c'est également vrai pour les objets terrestres évoluant à des vitesses au moins comparables dans des conditions similaires, des contraintes qui résultent d'actions aérodynamiques de contact, s'exercent sur la surface externe des parois. Ces actions aérodynamiques se décomposent en deux, des premières actions aérodynamiques d'origine visqueuse et turbulente et des secondes actions aérodynamiques de pression. Bien que les premières soient essentiellement liées à la formation des couches limites qui se développent à la surface des parois et les secondes à la géométrie du véhicule, elles sont néanmoins fortement liées entre elles. La somme de ces actions aérodynamiques de pression et de frottements se traduit par la traînée aérodynamique dont la réduction permet de diminuer la résistance au déplacement du véhicule dans l'air.

Dans le document FR2859160, la réduction de la traînée est effectuée par l'actionneur qui déplace à coulissement un organe tubulaire monté à coulissement dans un évidement cylindrique. L'organe tubulaire est entraîné alternativement en translation pour faire varier alternativement le volume de chambres à chaque extrémité de l'organe tubulaire, chaque chambre communiquant avec des fentes formant les orifices pour générer les flux d'air.

L'actionneur selon FR2859160 peut être volumineux, ce qui pose des problèmes pour l'intégration dans un véhicule à des emplacements où la place disponible est comptée, surtout s'il faut implanter plusieurs sous ensembles.

Le document EP1544089 décrit un dispositif de contrôle du flux aérodynamique destiné à équipé un véhicule motorisé selon le préambule de la revendication 1.

Le document EP0315806 décrit un dispositif aérodynamique à électro aimant qui présente pour inconvénient d'avoir une certaine inertie et qui peut aussi être volumineux.

Le document WO99/26457 décrit un dispositif miniature à jet synthétique pour appareil électronique, pour une aération ponctuelle de composant. Il ne permet pas d'agir sur une grande surface telle qu'une surface de véhicule automobile.

L'invention vise à améliorer les diverses solutions proposées ci-dessus.

L'invention a pour objet un sous ensemble de véhicule automobile adapté à être intégré dans un élément de carrosserie du véhicule, le sous ensemble présentant un panneau externe délimitant un orifice de dispositif aérodynamique qui comporte une chambre dont le volume est variable. Le sous ensemble comporte une pluralité d'orifices d'une pluralité de dispositifs aérodynamiques, chaque dispositif comportant au moins l'un desdits orifices et comportant une paroi qui délimite la chambre et présente une membrane dont un mouvement est animé par réaction d'un matériau de membrane à l'application d'une tension électrique. Deux chambres adjacentes de deux dispositifs adjacents comportent une paroi commune avec une membrane commune.

Selon d'autres caractéristiques avantageuses de l'invention qui peuvent être prises séparément ou en combinaison :
- le matériau de la membrane comporte un matériau polymère électro actif ou piézo électrique,
- chaque dispositif comporte une pluralité de membranes,
- chaque chambre comporte une pluralité d'orifices
- la paroi présentant la membrane est sensiblement parallèle au panneau délimitant l'orifice,
- la paroi présentant la membrane est sensiblement perpendiculaire au panneau délimitant l'orifice,
- l'orifice est une fente,
- les orifices (26) sont des fentes alignées de manière à former une ouverture sous forme d'une fente d'apparence continue,

L'invention a également pour objet un véhicule qui comporte au moins un sous ensemble selon l'invention.

Le véhicule comporte des moyens pour commander l'application de la tension électrique selon au moins une fréquence déterminée. La tension appliquée dans un premier dispositif du sous ensemble peut être différente de la tension appliquée au même instant et au moins temporairement à un deuxième dispositif du sous ensemble. La tension appliquée dans un premier dispositif du sous ensemble peut être identique à la tension appliquée au même instant et au moins temporairement à un deuxième dispositif du sous ensemble.

Le sous ensemble est un sous ensemble de contrôle de l'écoulement de l'air autour du véhicule adapté à générer des flux d'air à travers les orifices de manière à réduire la traînée aérodynamique du véhicule lorsqu'il est en mouvement, les flux d'air étant des jets synthétiques.

D'autres caractéristiques et avantages de l'invention apparaîtront clairement à la lecture de la description suivante des modes de réalisation non limitatifs de celle-ci, en liaison avec les desseins annexés sur lesquels :
- la figure 1 est une vue en perspective de trois quart arrière et de dessus d'un véhicule comportant un sous ensemble selon l'invention,
- la figure 2 est une section d'un dispositif de sous ensemble selon l'invention,
- la figure 3 est une vue en perspective d'un premier mode de réalisation de sous ensemble selon l'invention,
- la figure 4 est une vue en perspective d'un deuxième mode de réalisation de sous ensemble selon l'invention,
- les figures 5 à 8 sont des vues en perspective de divers modes de réalisation de dispositifs de sous ensemble selon l'invention.

Dans la description qui va suivre, la direction désignée L est la direction longitudinale correspondant à l'axe d'avancement d'un véhicule, la direction désignée T est transversale, la direction désignée V est verticale. L'axe L est orienté de l'avant vers l'arrière du véhicule, l'axe T de la gauche vers la droite et l'axe V du bas vers le haut.

Selon l'invention, un véhicule 10 automobile est équipé de sous ensembles 20 intégrés dans un élément de carrosserie, ici le pavillon du véhicule. Il y a un sous ensemble 20, à proximité du pare brise et un sous ensemble à proximité de la lunette arrière. Chaque sous ensemble est situé à un emplacement où l'air est susceptible de s'écouler au voisinage de la surface externe 22 du pavillon en formant une couche limite comprise entre une lame d'air fortement perturbée proche de la surface externe 22 et une lame d'air non perturbée éloignée de la surface externe 22, lorsque le véhicule automobile est en mouvement.

Chaque sous ensemble, assemblé au pavillon, présente une portion de la surface externe 22 sur un panneau externe 24 délimitant un orifice 26 de dispositif aérodynamique.

Chaque dispositif comporte une chambre 30 dont le volume est variable par le mouvement d'une membrane 32, la chambre étant ouverte au niveau de l'orifice 26. Ici, chaque dispositif comporte une chambre parallélépipédique rectangle.

Selon l'invention, le sous ensemble 20 comporte une pluralité d'orifices 26 d'une pluralité de dispositifs aérodynamiques, chaque dispositif comportant au moins l'un desdits orifices 26 et comportant une desdites chambres 30.

Afin de proposer un sous ensemble compact, la membrane 32 est placée directement sur au moins une des parois qui délimite la chambre 30. Le mouvement de la membrane 32 est animé par réaction d'un matériau de la membrane à l'application d'une tension électrique.

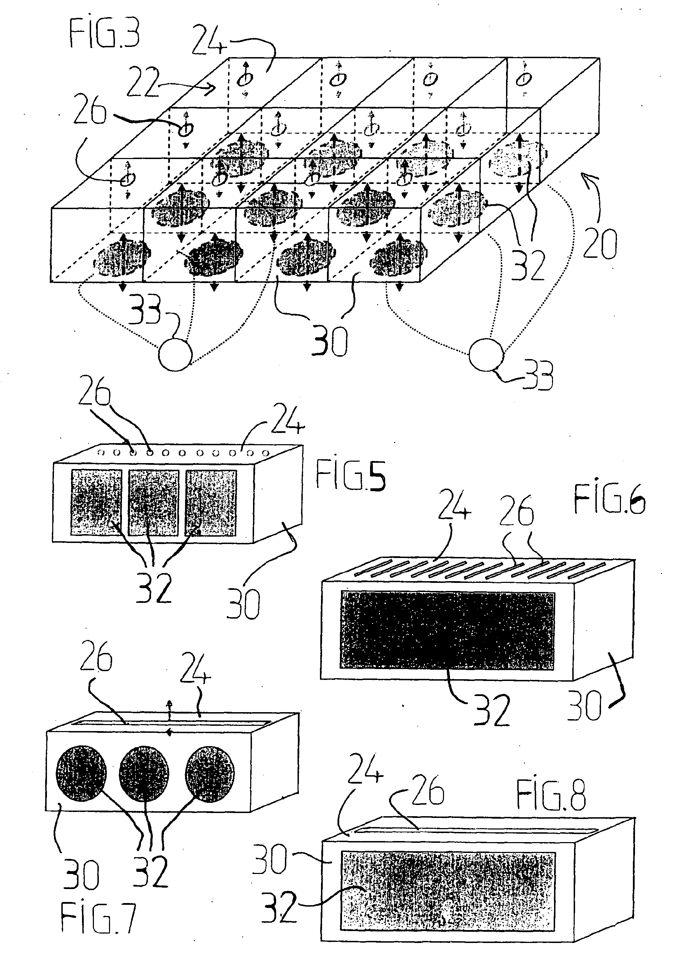

Lorsque la membrane 32 est actionnée en appliquant une tension électrique (générateur 33 visible à la figure 3), il y a déplacement radial et transversal de la membrane, qui se traduit par une flexion périodique, qui crée un jet d'air composé de structures tourbillonnaires 40 à travers l'ouverture, ce qui permet de contrôler l'écoulement extérieur 42.

Dans un mode de réalisation, le matériau de la membrane comporte un matériau polymère électro actif, du type connu par l'homme du métier dans le document US2003/0214199. Le principe de fonctionnement est l'application d'une tension aux bornes d'électrodes déposées sur une couche de polymère isolant, la tension (courant continu) induisant une différence de potentiel entre les deux électrodes et une déformation du polymère. Les avantages d'une membrane avec polymère électro actif sont les suivants : grande capacité de déformation, fonctionnement à haute et basse fréquence et dans une large gamme de température, fonctionnement silencieux, grande énergie spécifique (supérieure à celle des matériaux. électro céramiques ou des alliages à mémoire de forme), temps de réponse de l'ordre de la milliseconde, faible coût de production.

Dans un autre mode de réalisation, le matériau de la membrane comporte un matériau piézo électrique, du type connu par l'homme du métier dans le document WO99/26457. Selon l'invention, une céramique piézo électrique est collée sur un support métallique formant la membrane. L'avantage d'une membrane piézo électrique selon l'invention est qu'elle assure un régime linéaire de fonctionnement jusque dans les hautes fréquences (autour du KHz) dans une large gamme de température, avec un temps de réponse rapide de l'ordre de la milliseconde. Sa consommation d'énergie est minimale comparée à celle consommée par des actionneurs de type électro aimant agissant sur un piston. Sa masse est très faible, tout comme son coût et son encombrement. La vitesse du jet en sortie de l'orifice est fonction de la tension d'alimentation de la membrane piézo électrique.

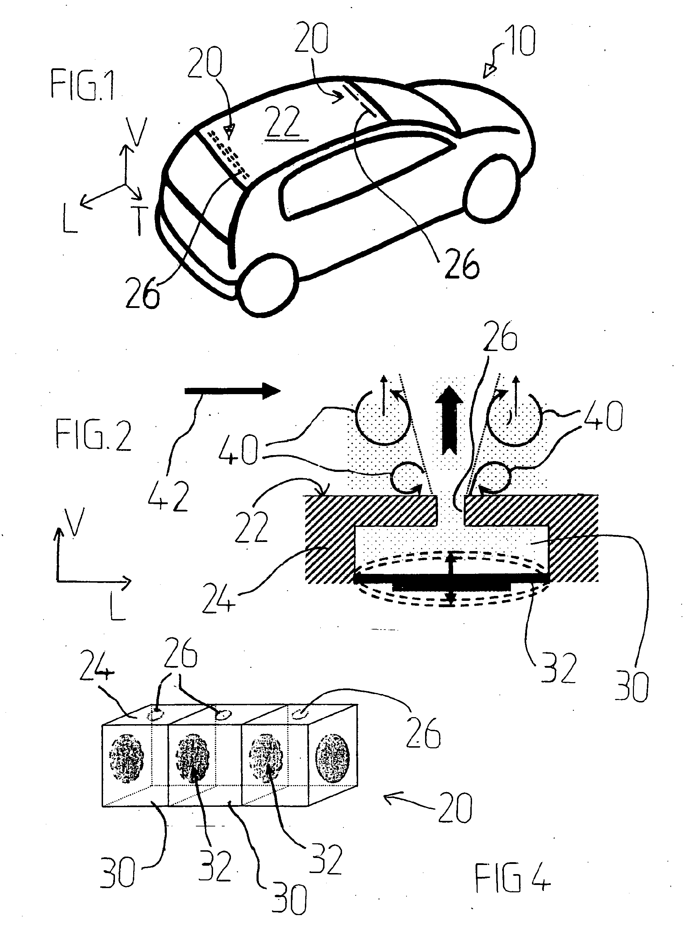

Ici, dans l'exemple représenté à la figure 2, la paroi présentant la membrane 32 est la paroi de fond de la cavité 30 qui est sensiblement parallèle au panneau délimitant l'orifice, à distance de ce dernier.

Ce type de dispositif est suffisamment compact pour être intégré dans un sous ensemble présentant une pluralité de dispositifs dans un pavillon de véhicule.

Dans le cas du mode de réalisation de la figure 3, les dispositifs du sous ensemble sont disposés selon un pavage, chaque dispositif du pavage étant conforme au mode de réalisation de la figure 2.

Dans les modes de réalisation représentés aux figures 5 à 8, la chambre est sensiblement trois fois plus longue que large et haute. Il est possible que la chambre soit encore plus longue par rapport à sa hauteur et sa largeur.

Dans les modes de réalisation représentés aux figures 4, 5 et 7 chaque dispositif du sous ensemble comporte une pluralité de membranes. Les membranes de chaque dispositif sont alimentées en phase dans le cas des modes de réalisation des figures 5 et 7, les membranes étant alignées sur une même paroi.

Dans les modes de réalisation représentés aux figures 5 et 6, chaque chambre 30 comporte une pluralité d'orifices. A la figure 5, les orifices sont de section circulaire et sont alignés sur la longueur du panneau 24 de la chambre. A la figure 6, les orifices sont des fentes et sont alignés parallèlement, sur la longueur du panneau 24 de la chambre.

Dans les modes de réalisation représentés aux figures 4 à 8, la paroi présentant la membrane 32 ou les membranes 32 est sensiblement perpendiculaire au panneau 24 délimitant l'orifice.

Dans le mode de réalisation représenté à la figure 4, deux chambres adjacentes de deux dispositifs adjacents comportent une paroi commune avec une membrane commune. Les membranes de chaque dispositif sont alimentées en opposition de phase dans le cas du mode de réalisation de la figure 4, les membranes étant sur des parois opposées d'une même chambre. La compression provoquée par le déplacement d'une membrane 32 à l'intérieur d'une chambre 30 se traduit par une extension dans la chambre 30 adjacente et deux jets synthétiques sont produits alternativement en une période du signal de commande. Ces deux jets adjacents entraînent l'air environnant, interagissent l'un avec l'autre et se mêlent en un seul jet plus important en aval de la chambre 30.

Etant donné que chaque membrane 32 est entourée par de l'air se trouvant dans des chambres 30, la différence de pression aux bornes de chaque membrane 32 est faible. Une grande partie de l'énergie destinée à déplacer chaque membrane 32 est donc utilisée pour créer le jet d'air synthétique. Grâce à cette caractéristique, on a plus besoin d'une source d'énergie électrique aussi puissante que celles de l'art antérieur pour piloter la membrane 32 lorsque la différence de pression entre l'air à l'intérieur et l'air à l'extérieur de la chambre 30 est importante.

En alignant des dispositifs tels que ceux représentés aux figures 7 et 8, le sous ensemble comporte une ouverture sous forme d'une longue fente d'apparence continue qui peut par exemple être placée juste à l'arrière d'un pare brise de véhicule pour le traitement de l'écoulement sur le pavillon, au bénéfice de la réduction de la consommation, éventuellement combiné au bénéfice de la réduction du bruit dans l'habitacle du véhicule. Une alternative consiste à mettre aussi bout à bout des dispositifs dans un sous ensemble, mais en supprimant la paroi séparant deux dispositifs adjacent pour avoir un sous ensemble équivalent à un long dispositif tel que représenté aux figures 7 et 8.

Le véhicule comporte des moyens pour commander l'application de la tension électrique dans les membranes selon au moins une fréquence déterminée. Par exemple, dans un premier mode de fonctionnement, au moins temporairement, la tension appliquée dans un premier dispositif du sous ensemble est différente la tension appliquée au même instant à une deuxième dispositif du sous ensemble. Dans un deuxième mode de fonctionnement, au moins temporairement, la tension appliquée dans un premier dispositif du sous ensemble peut être identique à la tension appliquée au même instant à une deuxième dispositif du sous ensemble.

## Revendications

1. Sous ensemble de véhicule automobile adapté à être intégré dans un élément de carrosserie du véhicule, le sous ensemble présentant un panneau externe (24) délimitant un orifice (26) de dispositif aérodynamique qui comporte une chambre (30) dont le volume est variable, le sous ensemble (20) comportant une pluralité d'orifices (26) d'une pluralité de dispositifs aérodynamiques, chaque dispositif comportant au moins l'un desdits orifices (26) et comportant une paroi qui délimite la chambre (30) et présente une membrane (32) dont un mouvement est animé par réaction d'un matériau de membrane à l'application d'une tension électrique **caractérisé en ce que** deux chambres adjacentes (30) de deux dispositifs adjacents comportent une paroi commune avec une membrane commune (32).

2. Sous ensemble selon la revendication 1, **caractérisé en ce que** le matériau de la membrane (32) comporte un matériau polymère électro actif.

3. Sous ensemble selon la revendication 1, **caractérisé en ce que** le matériau de la membrane (32) comporte un matériau piézo électrique.

4. Sous ensemble selon l'une quelconque des revendications précédentes, **caractérisé en ce que** chaque dispositif comporte une pluralité de membranes (32).

5. Sous ensemble selon l'une quelconque des revendications précédentes, **caractérisé en ce que** chaque chambre (30) comporte une pluralité d'orifices (26).

6. Sous ensemble selon l'une quelconque des revendications précédentes, **caractérisé en ce que** la paroi présentant la membrane (32) est sensiblement parallèle au panneau délimitant l'orifice (26).

7. Sous ensemble selon l'une quelconque des revendications 1 à 5 , **caractérisé en ce que** la paroi présentant la membrane (32) est sensiblement perpendiculaire au panneau délimitant l'orifice (26).

8. Sous ensemble selon l'une quelconque des revendications précédentes, **caractérisé en ce que** l'orifice (26) est une fente.

9. Sous ensemble selon la revendication précédente, **caractérisé en ce que** les orifices (26) sont des fentes alignées de manière à former une ouverture sous forme d'une fente d'apparence continue.

10. Véhicule automobile comportant au moins un sous ensemble selon l'une quelconque des revendications précédentes, **caractérisé en ce qu'**il comporte des moyens pour commander l'application de la tension électrique selon au moins une fréquence déterminée, la tension appliquée dans un premier dispositif du sous ensemble (20) étant différente de la tension appliquée au même instant et au moins temporairement à un deuxième dispositif du sous ensemble.

11. Véhicule automobile comportant au moins un sous ensemble selon l'une quelconque des revendications 1 à 9, **caractérisé en ce qu'**il comporte des moyens pour commander l'application de la tension électrique selon au moins une fréquence déterminée, la tension appliquée dans un premier dispositif du sous ensemble (20) étant identique à la tension appliquée au même instant et au moins temporairement à un deuxième dispositif du sous ensemble.

12. Véhicule automobile selon la revendication précédente, **caractérisé en ce que** le sous ensemble (20) est un sous ensemble de contrôle de l'écoulement de l'air autour du véhicule adapté à générer des flux d'air à travers les orifices (26) de manière à réduire la traînée aérodynamique du véhicule lorsqu'il est en mouvement.

## Claims

1. Motor vehicle subassembly designed to be incorporated into part of the bodywork of the vehicle, the subassembly having an external panel (24) delimiting an orifice (26) of an aerodynamic device which comprises a chamber (30) the volume of which is variable, the subassembly (20) comprising a plurality of orifices (26) of a plurality of aerodynamic devices, each device comprising at least one of the said orifices (26) and comprising a wall which delimits the chamber (30) and has a membrane (32), movement of which is driven by the reaction of a membrane material to the application of an electrical voltage, **characterized in that** two adjacent chambers (30) of two adjacent devices have a common wall with a common membrane (32).

2. Subassembly according to Claim 1, **characterized in that** the material of the membrane (32) includes an electroactive polymer.

3. Subassembly according to Claim 1, **characterized in that** the material of the membrane (32) includes a piezoelectric material.

4. Subassembly according to any one of the preceding claims, **characterized in that** each device comprises a plurality of membranes (32).

5. Subassembly according to any one of the preceding claims, **characterized in that** each chamber (30) comprises a plurality of orifices (26).

6. Subassembly according to any one of the preceding claims, **characterized in that** the wall that has the membrane (32) is substantially parallel to the panel delimiting the orifice (26).

7. Subassembly according to any one of Claims 1 to 5, **characterized in that** the wall that has the membrane (32) is substantially perpendicular to the panel delimiting the orifice (26).

8. Subassembly according to any one of the preceding claims, **characterized in that** the orifice (26) is a slit.

9. Subassembly according to the preceding claim, **characterized in that** the orifices (26) are slits which are aligned in such a way as to form an opening in the form of a slit of continuous appearance.

10. Motor vehicle comprising at least one subassembly according to any one of the preceding claims, **characterized in that** it comprises means for commanding the electrical voltage to be applied at at least one determined frequency, the voltage applied to a first device of the subassembly (20) being different from the voltage applied at the same instant and at least temporarily to a second device of the subassembly.

11. Motor vehicle comprising at least one subassembly according to any one of Claims 1 to 9, **characterized in that** it comprises means for commanding the application of the electrical voltage at at least one determined frequency, the voltage applied to a first device of the subassembly (20) being identical to the voltage applied at the same instant and at least temporarily to a second device of the subassembly.

12. Motor vehicle according to the preceding claim, **characterized in that** the subassembly (20) is a subassembly that controls the flow of air around the vehicle and is designed to generate air flow through the orifices (26) so as to reduce the aerodynamic drag of the vehicle when the vehicle is in motion.

## Patentansprüche

1. Kraftfahrzeug-Untereinheit, die geeignet ist, um in ein Karosserieelement des Fahrzeugs eingebaut zu werden, wobei die Untereinheit eine Außenplatte (24) aufweist, die eine Öffnung (26) einer aerodynamischen Vorrichtung begrenzt, welche eine Kammer (30) aufweist, deren Volumen variabel ist, wobei die Untereinheit (20) mehrere Öffnungen (26) von mehreren aerodynamischen Vorrichtungen aufweist, wobei jede Vorrichtung mindestens eine der Öffnungen (26) und eine Wand aufweist, die die Kammer (30) begrenzt und eine Membran (32) enthält, deren Bewegung durch Reaktion eines Membranmaterials auf das Anlegen einer elektrischen Spannung angeregt wird, **dadurch gekennzeichnet, dass** zwei benachbarte Kammern (30) von zwei benachbarten Vorrichtungen eine gemeinsame Wand mit einer gemeinsamen Membran (32) aufweisen.

2. Untereinheit nach Anspruch 1, **dadurch gekennzeichnet, dass** das Material der Membran (32) ein elektroaktives Polymermaterial aufweist.

3. Untereinheit nach Anspruch 1, **dadurch gekennzeichnet, dass** das Material der Membran (32) ein piezoelektrisches Material aufweist.

4. Untereinheit nach einem der vorhergehenden Ansprüche, **dadurch gekennzeichnet, dass** jede Vorrichtung mehrere Membranen (32) aufweist.

5. Untereinheit nach einem der vorhergehenden Ansprüche, **dadurch gekennzeichnet, dass** jede Kammer (30) mehrere Öffnungen (26) aufweist.

6. Untereinheit nach einem der vorhergehenden Ansprüche, **dadurch gekennzeichnet, dass** die die Membran (32) enthaltende Wand im Wesentlichen parallel zu der die Öffnung (26) begrenzenden Platte ist.

7. Untereinheit nach einem der Ansprüche 1 bis 5, **dadurch gekennzeichnet, dass** die die Membran (32) enthaltende Wand im Wesentlichen lotrecht zu der die Öffnung (26) begrenzenden Platte ist.

8. Untereinheit nach einem der vorhergehenden Ansprüche, **dadurch gekennzeichnet, dass** die Öffnung (26) ein Schlitz ist.

9. Untereinheit nach dem vorhergehenden Anspruch, **dadurch gekennzeichnet, dass** die Öffnungen (26) Schlitze sind, die so fluchtend ausgerichtet sind, dass sie eine Öffnung in Form eines scheinbar durchgehenden Schlitzes bilden.

10. Kraftfahrzeug, das mindestens eine Untereinheit nach einem der vorhergehenden Ansprüche aufweist, **dadurch gekennzeichnet, dass** es Einrichtungen aufweist, um das Anlegen der elektrischen Spannung gemäß mindestens einer bestimmten Frequenz zu steuern, wobei die an eine erste Vorrichtung der Untereinheit (20) angelegte Spannung sich von der Spannung unterscheidet, die im gleichen Moment und zumindest vorübergehend an eine zweite Vorrichtung der Untereinheit angelegt wird.

11. Kraftfahrzeug, das mindestens eine Untereinheit nach einem der Ansprüche 1 bis 9 aufweist, **dadurch gekennzeichnet, dass** es Einrichtungen aufweist, um das Anlegen der elektrischen Spannung gemäß mindestens einer bestimmten Frequenz zu steuern, wobei die an eine erste Vorrichtung der Untereinheit (20) angelegte Spannung gleich der Spannung ist, die im gleichen Moment und zumindest vorübergehend an eine zweite Vorrichtung der Untereinheit angelegt wird.

12. Kraftfahrzeug nach dem vorhergehenden Anspruch, **dadurch gekennzeichnet, dass** die Untereinheit (20) eine Untereinheit zur Überwachung der Luftströmung um das Fahrzeug herum ist, die geeignet ist, um Luftströme durch die Öffnungen (26) zu erzeugen, um den aerodynamischen Widerstand des Fahrzeugs, wenn es in Bewegung ist, zu reduzieren.
